# EUROPÄISCHE PATENTSCHRIFT

(11) **EP 1 963 702 B1**
(45) Veröffentlichungstag und Bekanntmachung des Hinweises auf die Patenterteilung: **17.03.2010**
(21) Anmeldenummer: 06829572.4
(22) Anmeldetag: 13.12.2006
(51) Int. Cl.: F16D 65/097

(54) **BREMSBELAG FÜR EINE SCHEIBENBREMSE**
BRAKE LINING FOR A DISC BRAKE
GARNITURE DE FREIN POUR UN FREIN À DISQUE

(30) Priorität: 14.12.2005 DE 102005060177; 27.07.2006 DE 102006034764
(43) Veröffentlichungstag der Anmeldung: 03.09.2008
(73) Patentinhaber: KNORR-BREMSE Systeme für Nutzfahrzeuge GmbH, 80809 München (DE)
(72) Erfinder: CAMILO-MARTINEZ, José, 82008 Unterhaching (DE); MÜLLER, Michael, 86701 Rohrenfels (DE)
(74) Vertreter: Mattusch, Gundula
(86) Internationale Anmeldenummer: PCT/EP2006/011997
(87) Internationale Veröffentlichungsnummer: WO 2007/068464

(56) Entgegenhaltungen:
- EP-A- 1 491 789
- EP-A1- 0 248 385
- WO-A-87/00896
- DE-A1- 19 515 841
- US-A1- 4 049 087

## Beschreibung

Die vorliegende Erfindung betrifft einen Bremsbelag für eine Scheibenbremse gemäß dem Oberbegriff des Anspruchs 1.

Ein gattungsgemäßer Bremsbelag ist aus der DE 40 20 287 A1 bekannt. Die dort gezeigte und beschriebene Konstruktion hat sich in der Praxis durchaus bewährt. Dabei ist die Bremsbelaghalterung so ausgebildet, dass die Bremsbelagfeder einen Griff bildet, so dass die Baueinheit Bremsbelagfeder/Bremsbelag beispielsweise zur Montage bzw. Demontage sehr leicht zu handhaben ist.

Zur Festlegung der Belaghaltefeder sind an der Belagträgerplatte mit Hinterschneidungen versehene Laschen angeformt, die schlitzförmige Ausnehmungen in der Belaghaltefeder durchtreten, die dabei die Hinterschneidungen hintergreifen, so dass ein Formschluss gebildet ist, durch den die Belaghaltefeder in radialer Richtung gehalten wird und zwar so, dass ein selbsttätiges Lösen in entspannter oder teilentspannter Lage ausgeschlossen ist.

Da zur Festlegung der Belaghaltefeder lediglich zwei Anbindungsstellen vorgesehen sind, die abständig zueinander angeordnet sind, wird die Belaghaltefeder beim Benutzen als Griff mittig gefasst, so dass die Belaghaltefeder im Sinne eines zweiseitig eingespannten Trägers fungiert, mit der Neigung, ihn entsprechend stark durchzubiegen.

Unter Umständen kann sich durch diese Verformung die Federcharakteristik der Belaghaltefeder verändern, was sich nachteilig in der Funktion auswirken kann.

Die Herstellung der hinterschnittenen Laschen der Belagträgerplatte ist im Grunde nur durch eine mechanische Bearbeitung möglich, beispielsweise durch Prägen, Stanzen oder dergleichen. Dies gilt gleichermaßen für die Ausbildung der schlitzförmigen Ausnehmungen der Belaghaltefeder, die ebenfalls nur durch eine entsprechende mechanische Bearbeitung eingebracht werden können.

Aus der EP 0 248 385 A1 ist ein Bremsbelag gemäß der Gattung bekannt, bei dem die Belaghaltefeder abgewinkelte, seitlich an der Belagträgerplatte anliegende Laschen aufweist, die eine Verschiebesicherung der Belaghaltefeder quer zu ihrer Längserstreckung bilden.

Die US 4 049 087 A1 ebenso wie die WO 87/00896 A geben jeweils einen Bremsbelag wieder, in dem die Belaghaltefeder mittels einer Haube derart mit der Belagträgerplatte verbunden ist, dass eine radiale Auslenkung der Belaghaltefeder im Mittenbereich nicht möglich ist.

Der Erfindung liegt die Aufgabe zugrunde, den Bremsbelag der gattungsgemäßen Art so weiter zu entwickeln, dass dessen Funktionsbelastung optimiert wird.

Diese Aufgabe wird durch einen Bremsbelag mit den Merkmalen des Anspruchs 1 gelöst.

Durch die Erfindung wird erreicht, dass die Belaghaltefeder insbesondere im Belastungsbereich lastübertragend eingespannt ist, wodurch eine Aufbiegung der Belaghaltefeder vermieden wird, da der bislang wirksame Hebelarm nun nicht mehr vorhanden ist.

Nach einer besonders vorteilhaften Ausgestaltung ist die Haube, mit der die Belaghaltefeder erfindungsgemäß an der Belagträgerplatte befestigt ist, vorzugsweise im Mittenbereich der Belaghaltefeder angeordnet, wo die Kraftverteilung besonders optimal ist und dort insbesondere form- oder stoffschlüssig fest mit der Belaghaltefeder verbunden, so dass sie nicht verloren wird und nicht unbeabsichtigt von der Belagträgerplatte abspringen kann.

Auch der Anbindungsbereich an der Belagträgerplatte befindet sich vorzugsweise etwa in deren Mittenbereich, wobei unter Mittenbereich jeweils die mittleren 30 %, besonders vorzugsweise die mittleren 10 % der einander zugewandten Mittenbereiche der Belagträgerplatte und der Belaghaltefeder zu verstehen sind.

Der Formschluss zwischen der Haube und der Belagträgerplatte kann so ausgebildet sein, dass ein Entfernen der Belaghaltefeder von der Belagträgerplatte nur durch Zerstörung der Verbindung Belaghaltefeder/Haube möglich ist. Dadurch ist gewährleistet, dass bei einem Ersatz des Bremsbelages nur die komplette Baueinheit Bremsbelag/Belaghaltefeder ausgetauscht werden kann. D.h., die Wiederverwendung einer zuvor benutzten Belaghaltefeder ist ausgeschlossen, wodurch sich naturgemäß eine Verbesserung der Betriebssicherheit ergibt.

Nach einer vorteilhaften Weiterbildung der Erfindung ist vorgesehen, dass die Belagträgerplatte und die Haube miteinander korrespondierende Formschlussteile aufweisen, die eine ausreichende radiale Auslenkung der Belaghaltefeder zulassen. Hierfür kann die Belagträgerplatte radial sich erstreckende Ausnehmungen aufweisen, in denen zugeordnete Zähne der Haube rastend einliegen.

Zur Herstellung der Montageeinheit Bremsbelag/Bremsbelagfeder erfolgt eine Fixierung der Haube und damit der Belaghaltefeder an der Belagträgerplatte durch eine Rastnase, die nach einem Aufsetzen der Haube auf die Belagträgerplatte umgeformt wird und in einer unbelasteten Endstellung der Belaghaltefeder an einem Anschlag der Belagträgerplatte anliegt.

Jedem der beiden sich beidseitig der Haube erstreckenden Federschenkel der Belaghaltefeder ist eine Lasche der Belagträgerplatte zugeordnet, an der der jeweilige Federschenkel anliegt, wodurch ein Verdrehen der Belaghaltefeder wirksam verhindert wird. Diese Laschen sind vorzugsweise angegossen, wenn die Belagträgerplatte als Gussteil ausgebildet ist, wobei die Anordnung der Laschen einseitig oder wechselseitig vorgenommen sein kann. Im Übrigen ist durch die Formschlussverbindung der Haube mit der Belagträgerplatte ein problemloser Ausgleich von Gusstoleranzen möglich, ohne dass eine zusätzliche Bearbeitung der Belagträgerplatte erforderlich wäre.

Nach einem weiteren Gedanken der Erfindung ist vorgesehen, dass die Belaghaltefeder zumindest innerhalb des Überdeckungsbereiches der Haube ein progressiveres Federverhalten aufweist als in den sich anschließenden Federschenkeln.

Durch die mindestens zwei unterschiedlichen Federwege ergeben sich wesentlich Vorteile im Federverhalten während des Betriebs gegenüber einer Belaghaltefeder nach dem Stand der Technik.

Im "Normalbetrieb" der Scheibenbremse sind zunächst die relativ langen Federschenkel mit einer geringen Federkraft wirksam, wie sie unter anderem den gesetzlichen Forderungen entspricht.

Während des Fahrbetriebs, bei dem durch starke Erschütterungen relativ laute Klappergeräusche des Bremsbelages auftreten, die zwar keine Funktionseinschränkung bedeuten, jedoch als äußerst störend angesehen werden, wird ein kürzerer Federarm mit einer relativ großen Federkraft wirksam, wodurch verhindert wird, dass der Bremsbelag vom Bremsträger abhebt, was ansonsten zu den Klappergeräuschen führt.

Zu einer Minimierung dieser Geräusche trägt ebenfalls die symmetrische Abstützung der Belaghaltefeder durch die Haube bei, durch die ein einseitiges Abheben des Bremsbelags vom Bremsträger verhindert bzw. verringert wird.

Weitere vorteilhafte Ausbildungen der Erfindung sind in den Unteransprüchen gekennzeichnet.

Ein Ausführungsbeispiel wird nachfolgend anhand der beigefügten Zeichnungen beschrieben. Es zeigen:
- Figuren 1 und 2: einen montierten Bremsbelag jeweils in unterschiedlichen rückseitigen Perspektiv-Darstellungen

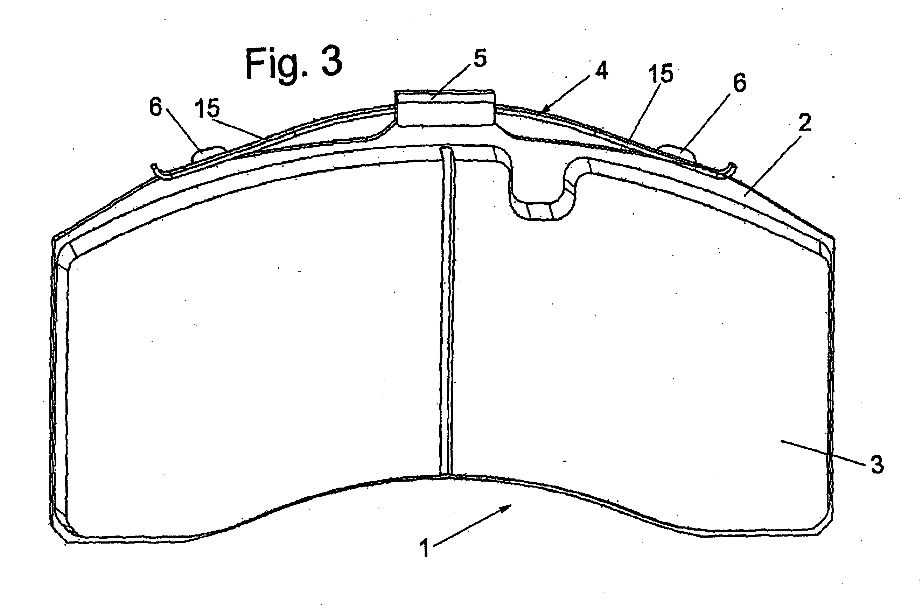

- Figur 3: eine Vorderansicht des Bremsbelages

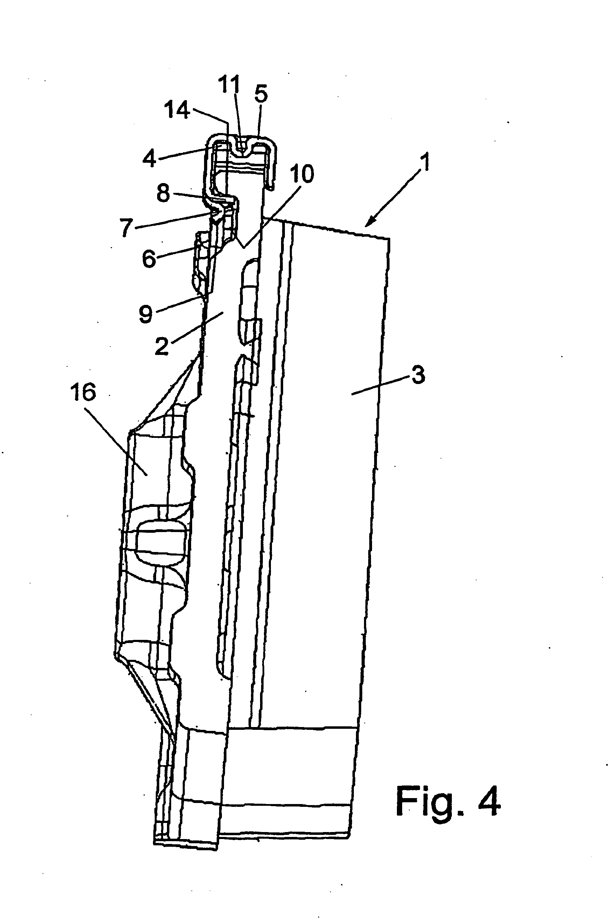

- Figur 4: eine geschnittene Seitenansicht des Bremsbelages

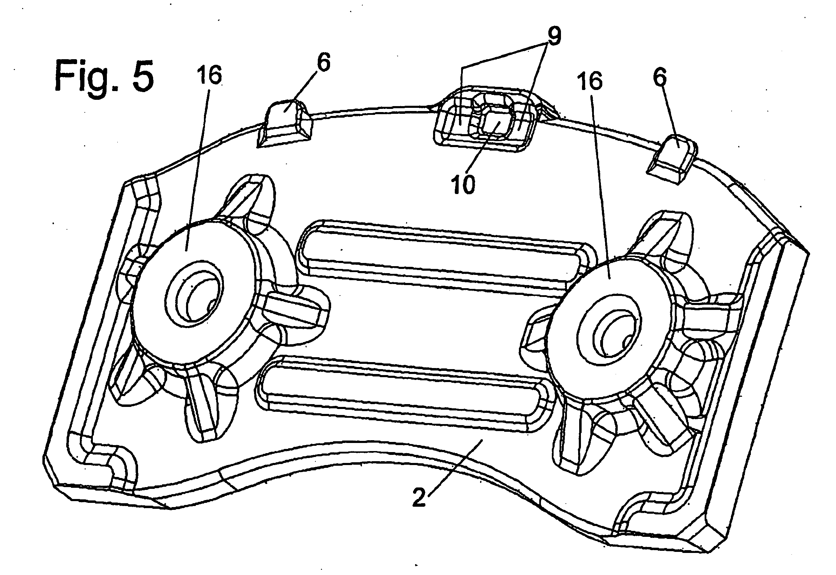

- Figur 5: eine Einzelheit eines Bremsbelages, ebenfalls in einer perspektivischen Ansicht
- Figur 6: eine Einzelheit des Bremsbelages in einer perspektivischen Ansicht
- Figur 7: eine Unteransicht auf eine weitere Einzelheit der Erfindung
- Figur 8: eine Belaghaltefeder in einer perspektivischen Ansicht
- Figur 9: ein Kraft-Weg-Diagramm der Belaghaltefeder
- Figur 10: ein weiteres Ausführungsbeispiel eines erfindungsgemäßen Bremsbelages in einer perspektivischen Ansicht
- Figur 11: eine Einzelheit des Bremsbelages nach Figur 10, ebenfalls schaubildlich dargestellt
- Figur 12: ein weiteres Ausführungsbeispiel einer Einzelheit des Bremsbelags, ebenfalls in perspektivischer Ansicht
- Figur 13: ein weiteres Ausführungsbeispiel der Erfindung in einer perspektivischen Ansicht
- Figuren 14 und 15: jeweils eine weitere Einzelheit einer Ausführungsvariante der Erfindung, jeweils perspektivisch dargestellt
- Figur 16: eine Einzelheit der Darstellung entsprechend den Figuren 14 und 15 in schaubildlicher Darstellung
- Figur 17: ein weiteres Ausführungsbeispiel der Erfindung, ebenfalls schaubildlich gezeigt
- Figur 18: eine mit erfindungsgemäßen Bremsbelägen versehene Scheibenbremse in einer Draufsicht
- Figur 19: ein weiteres Ausführungsbeispiel der Erfindung in einer perspektivischen Ansicht
- Figur 20: einen Teilausschnitt des Bremsbelages nach Figur 19 in einem Querschnitt gemäß der Linie XX-XX in Figur 19

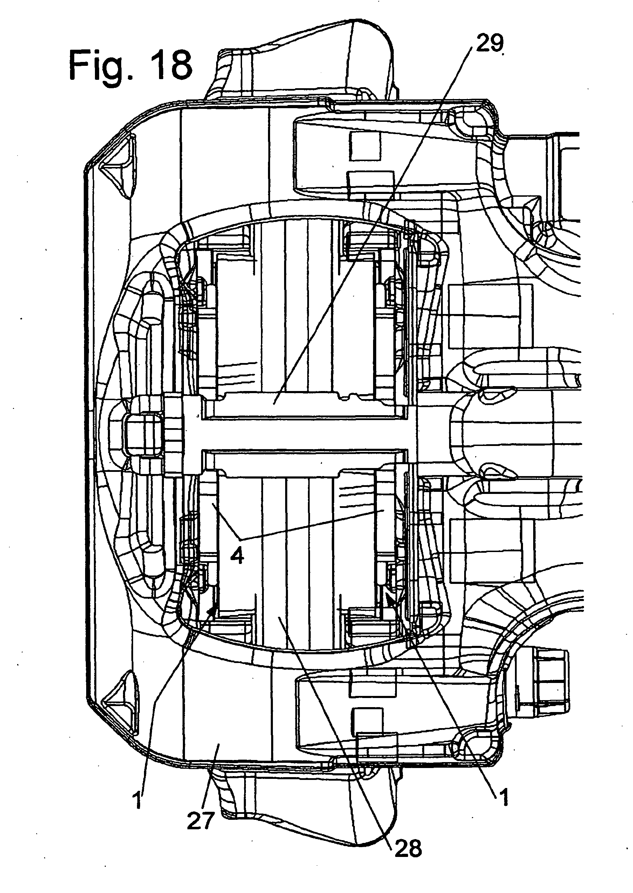

Der prinzipielle Aufbau einer Scheibenbremse ist in der Figur 18 erkennbar. Diese Scheibenbremse weist einen Bremssattel 27 auf, der eine Bremsscheibe 28 umfasst, an die beidseitig Bremsbeläge 1 anpressbar sind, wobei einer der Bremsbeläge mittels einer nicht dargestellten Zuspanneinrichtung im Funktionsfall gegen die Bremsscheibe 28 gedrückt wird.

Zur radialen Sicherung der Bremsbeläge 1 ist ein Haltebügel 29 am Bremssattel 27 befestigt, an dem sich Belaghaltefedern 4 der Bremsbeläge 1 abstützen.

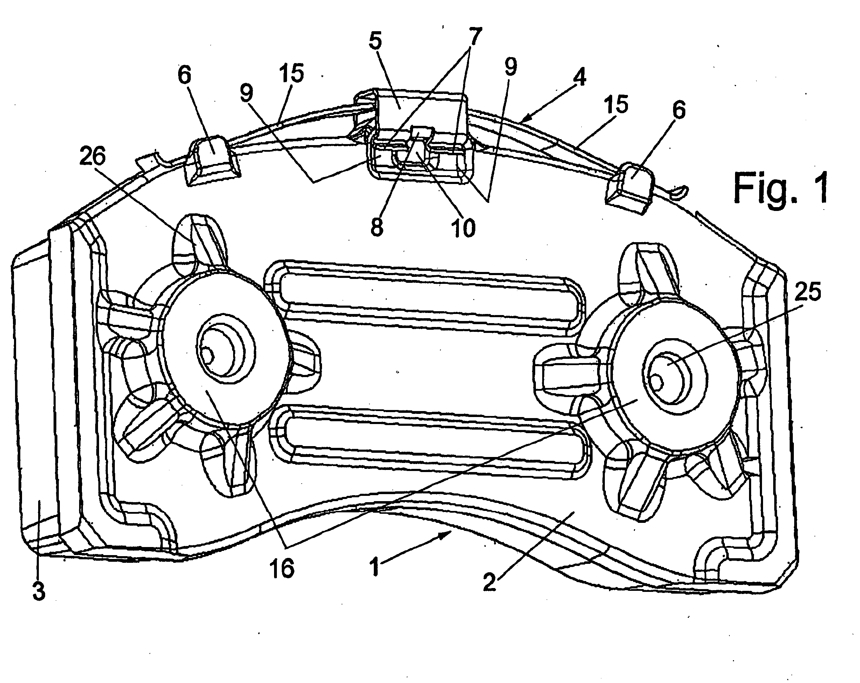

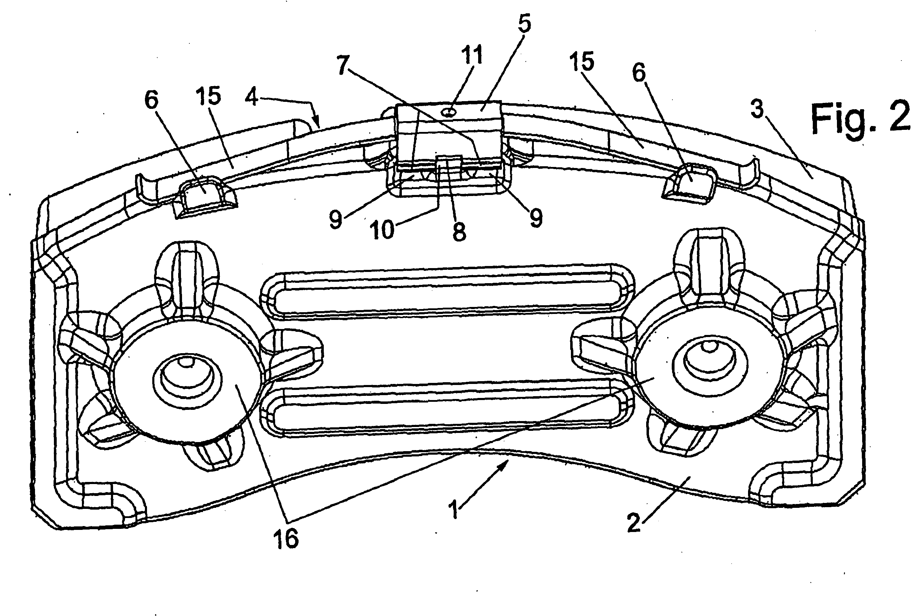

In den Figuren 1 und 2 ist ein Bremsbelag 1 dargestellt, der die als bogenförmige Blattfeder ausgebildete Belaghaltefeder 4 aufweist. Die Belaghaltefeder 4 ist verliergesichert und radial auslenkbar an einer einen Reibbelag 3 tragenden Belagträgerplatte 2 eines Bremsbelages 1 gehalten.

Auf ihrer dem Reibbelag 3 abgewandten Rückseite der Belagträgerplatte 2 sind einstückig Druckstücke 16 angeformt, die im Funktionsfall mit nicht dargestellten Stellspindeln einer Zuspanneinrichtung der Scheibenbremse korrespondieren. Diese Druckstücke 16 sind hier vorteilhaft als ringförmige Vorsprünge ausgebildet, die eine mittige Ausnehmung zum Eingriff von korrespondierenden Elementen der Zuspannvorrichtung aufweisen. Typischerweise handelt es sich dabei um Endbereiche von (Nach-)Stellspindeln der pneumatisch oder elektromechanisch betätigten Scheibenbremse.

Am Außenumfang der ringförmigen Abschnitte der Druckstücke 16 sind sich radial nach außen erstreckende Rippen 26 ausgebildet, deren Höhe nach außen hin abnimmt. Die Beläge sind insbesondere für pneumatisch betätigte Scheibenbremsen beispielsweise nach der Bauart des gattungsgemäßen Standes der Technik geeignet, wobei allerdings vorzugsweise die Druckstücke vorteilhaft mit an die Belagträgerplatte 2 angeformt sind.

Dabei ist die Belaghaltefeder 4 mittels einer daran befestigten Haube 5 mit der Belagträgerplatte 2 vorzugsweise formschlüssig verbunden.

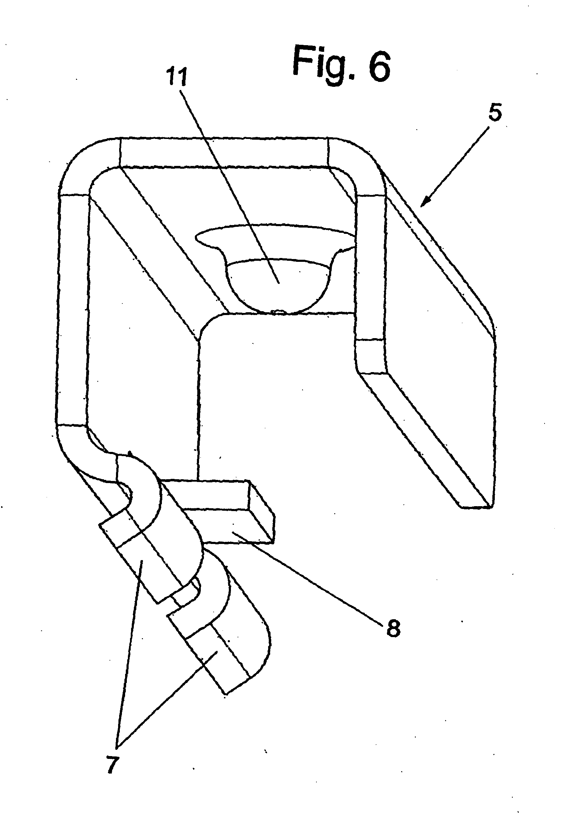

Wie insbesondere die Figur 6 sehr deutlich zeigt, ist die Haube 5 im Querschnitt etwa U-förmig oder insgesamt sogar geschlossen im wesentlichen rechteckig ausgebildet und weist in Fortsetzung des einen Schenkels zwei abständig zueinander verlaufende, nach außen gerichtete Zähne 7 auf, während zwischen diesen Zähnen 7 eine Nase 8 angeformt ist, die sich in entgegengesetzte Richtung, also nach innen erstreckt.

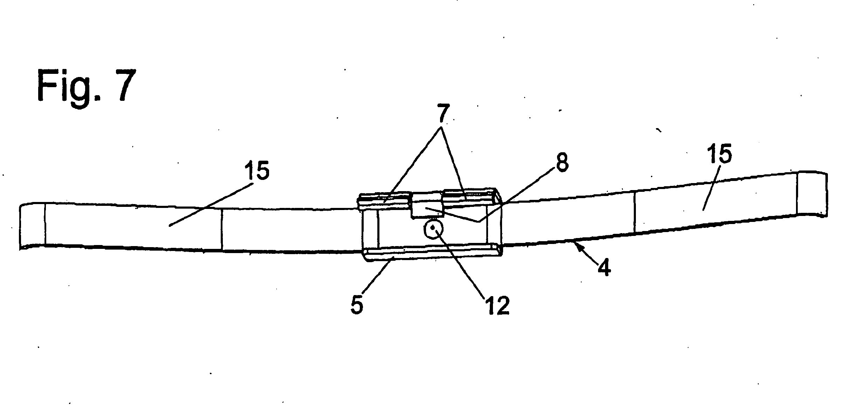

Zur Befestigung der Haube 5 mit der Belaghaltefeder 4 ist an der Haube 5, in dem die beiden parallelen Schenkel miteinander verbindenden Steg, ein nach innen gerichteter Buckel 11 ausgeprägt, der in ein Loch 12 (Figur 7) der Belaghaltefeder 4 eingesteckt und anschließend so verformt wird, dass ein fester Verbund der Haube 5 mit der Belaghaltefeder 4 entsteht. Diese Verbindung kann auch durch andere Formschlüsse, wie Nieten oder dergleichen oder durch Stoffschlüsse, wie Verschweißen oder Verlöten hergestellt werden.

Zunächst ist bei dieser Montageeinheit Haube 5/Belaghaltefeder 4 die Nase 8 noch nicht entsprechend der Darstellung in Figur 6 umgebogen, sondern gleichgerichtet mit dem zugeordneten Schenkel verlaufend.

Zur Montage wird die Haube 5 und die darin angeschlossene Belaghaltefeder 4 auf die Belagträgerplatte 2 aufgesetzt und zwar in einem Kantenbereich. Durch Aufdrücken der Haube 5 auf den Kantenbereich schnappen die Zähne 7 in Nuten 9 in der Belagträgerplatte 2, von denen jeweils eine einem Zahn 7 zugeordnet ist. Die Nase 8 hingegen wird in Richtung der Belagträgerplatte umgebogen in eine Ausnehmung 10, die zwischen den beiden Nuten 9 verläuft und die oberseitig durch einen Anschlag 14 begrenzt ist, an dem die Nase 8 in einer oberen Endstellung der Belaghaltefeder 4 anliegt, wodurch eine Verliersicherung der Einheit Belaghaltefeder 4/Haube 5 hergestellt ist.

Dabei sind die Nuten 9 und die Ausnehmung 10 auf der dem Reibbelag 3 abgewandten Seite der Belagträgerplatte 2 angeordnet.

Für eine Verdrehsicherung der Belaghaltefeder 4 sind an einer Seite der Belagträgerplatte 2, und zwar im vorliegenden Beispiel auf der dem Reibbelag 3 abgewandten Seite, zwei Laschen 6 angeformt, wobei jeweils ein sich seitlich der Haube 5 erstreckender Federschenkel 15 an einer zugeordneten Lasche 6 anliegt.

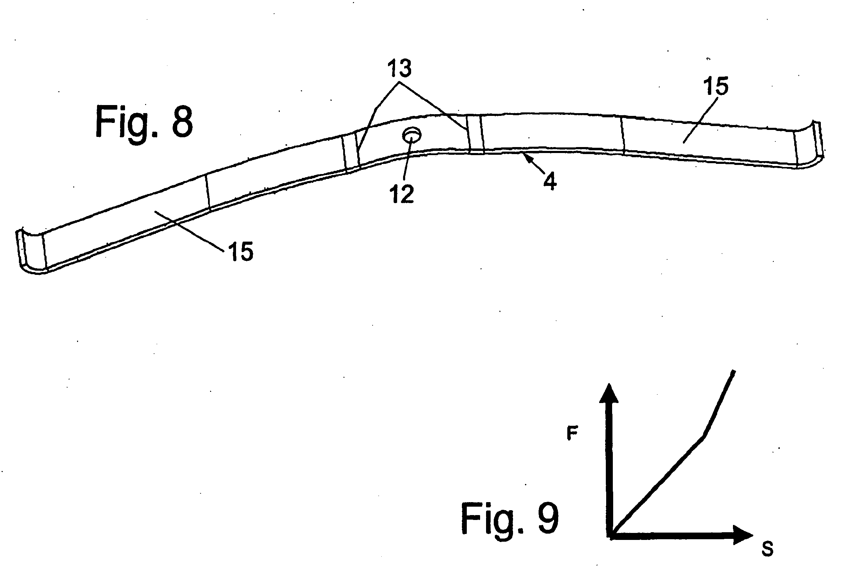

Wie insbesondere aus der Figur 8 hervorgeht, weist die Belaghaltefeder 4 im Überdeckungsbereich mit der Haube 5, dessen Begrenzung mit Bereichsanfang 13 bezeichnet ist, im Zusammenspiel mit der Haube 5 einen progressiven Anstieg der Federkraft auf, wobei die Haube 5 im Belastungsfall diesen Bereich flächig berührt, während die in sozusagen unbelasteter oder gering belasteter Position die Haube in der Mitte die Belaghaltefeder 4 praktisch in einer Linie berührt, d.h. an dieser anliegt.

In der Figur 9 ist ein Kraft-Weg-Diagramm der Belaghaltefeder 4 dargestellt.
Dabei ist auf der Abszisse der Weg S eingetragen, während auf der Ordinate die Federkraft F angetragen ist. Es ist erkennbar, dass zunächst ein langer Federarm mit langem Weg S und relativ geringer Federkraft F zur Wirkung kommt. Wenn dieser lange Federweg S überschritten ist, kommt ein kurzer Federweg S mit kurzem Federarm, entsprechend einer großen Federkraft F zur Wirkung, wobei der lange Federarm durch die beiden sich rechts und links der Bereichsanfänge 13 anschließende Federschenkel 15 und der kurze Federarm durch den Überdeckungsbereich der Haube 5 gebildet werden.

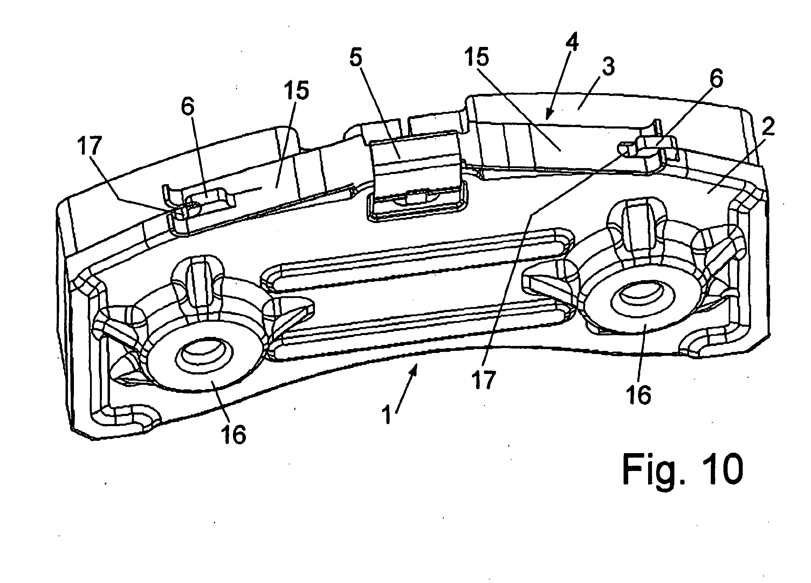

In der Figur 10 ist ein weiteres Ausführungsbeispiel der Erfindung dargestellt, wobei die dem Reibbelag 3 abgewandte Rückseite der Belagträgerplatte 2 erkennbar ist; die die angeformten Druckstücke 16 aufweist.

In diesem Ausführungsbeispiel weisen die beiden Federschenkel 15 endseitig jeweils einen Schlitz 17 auf, in denen eine zugeordnete Lasche 6 der Belagträgerplatte 2 geführt ist, die, bezogen auf die Dicke der Belagträgerplatte 2 etwa im Mittenbereich angeordnet sind, so dass die Belaghaltefeder 4 in beiden Richtungen, also einmal in Richtung des Reibbelages 3 und in entgegengesetzte Richtung arretiert ist.

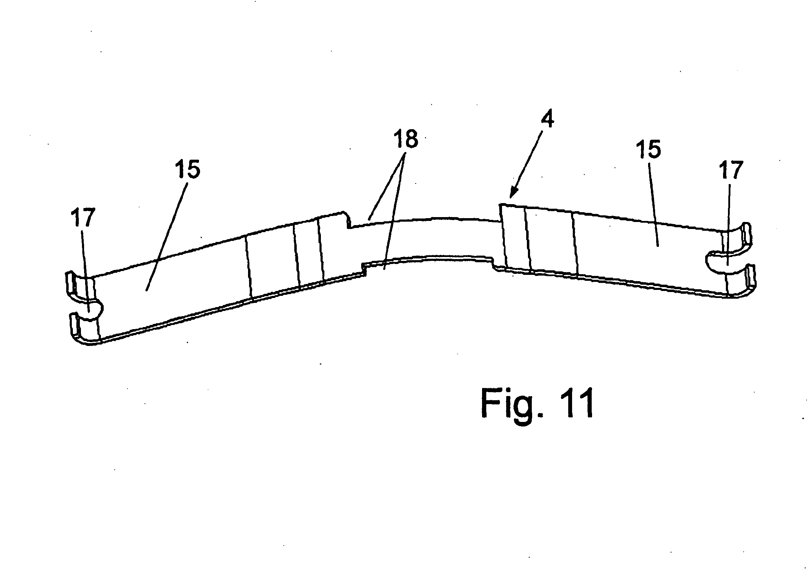

Die in diesem Sinne ausgebildete Belaghaltefeder 4 ist als Einzelheit in der Figur 11 dargestellt. Hierin ist auch erkennbar, dass die Belaghaltefeder 4 etwa im Überdeckungsbereich mit der Haube 5 auf den einander gegenüberliegenden Längsseiten jeweils eine Ausklinkung 18 aufweist, in denen die beiden sich gegenüberliegenden Schenkel der U-förmigen Haube 5 einliegen, wobei die Tiefe der Ausklinkungen 18 etwa der Dicke der zugeordneten Schenkel der Haube 5 entspricht.

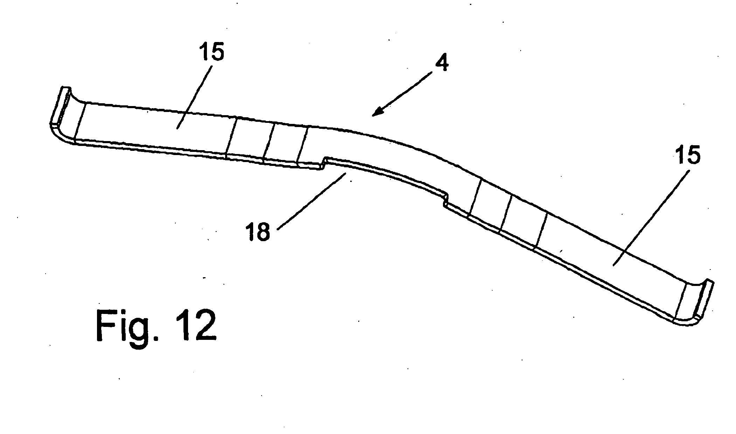

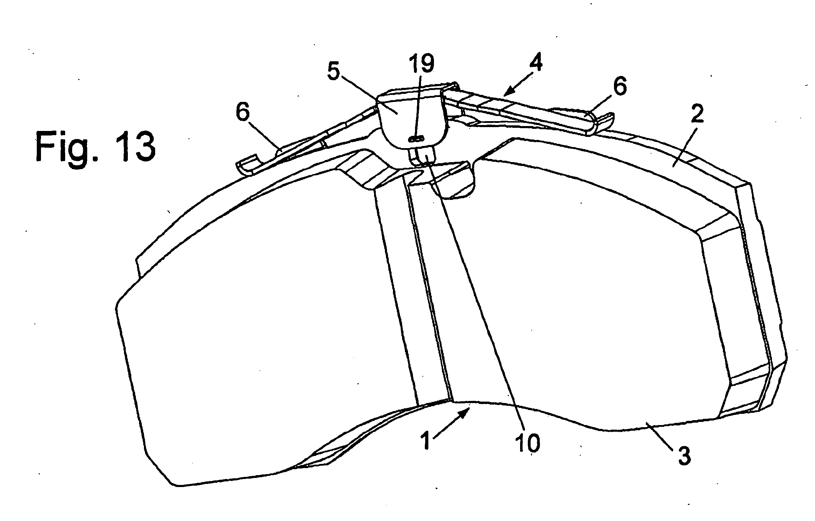

In der Figur 12 ist eine weitere Ausführungsvariante der Belaghaltefeder 4 gezeigt. Hierbei ist vorgesehen, lediglich an einer der Längsseiten der Belaghaltefeder 4 eine Ausklinkung 18 anzuordnen, die dann vorzusehen ist, wenn die Laschen 6 fluchtend mit einer der Seiten der Belagträgerplatte 2 verlaufen, wie dies beispielhaft in der Figur 13 erkennbar ist. In diesem Fall fluchtet die den Laschen 6 abgewandte Längsseite der Belaghaltefeder 4 mit der dem Reibbelag 3 zugewandten Seite der Belagträgerplatte 2, so dass, um eine Anlage des zugeordneten Schenkels der Haube 5 an der dem Reibbelag 3 zugewandten Seite der Belagträgerplatte 2 zu erreichen, diese Ausklinkung 18 erforderlich ist.

Eine beidseitige Ausklinkung 18, entsprechend der Figur 11, ist dann erforderlich, wenn beide Längskanten der Belaghaltefeder 4 mit der jeweiligen zugeordneten Seite der Belagträgerplatte 2 fluchtet (Figur 10).

In der Figur 13 ist weiter zu erkennen, dass die Ausnehmung 10 im Sinne eines Loches durchgängig ist und von einer Anschlagplatte 19 durchtreten ist, die in den beiden sich gegenüberliegenden Schenkeln der Haube 5 gehalten ist, wozu darin Einführschlitze 20 vorgesehen sind, in die die Anschlagplatte 19 eingesteckt ist. Zur Einschubbegrenzung der Anschlagplatte 19 ist an einem Ende ein Anschlagriegel 22 angeformt, der an der Außenseite des Schenkels 21 der Haube 5 anliegt, der den Zähnen 7 benachbart ist. Nach einem Aufsetzen der Haube 5 auf die Belagträgerplatte 2, unter Einschluss der Belaghaltefeder 4 wird die Anschlagplatte 19 mit üblichen Mitteln an der Haube 5 festgelegt, so dass ein fester Verbund zwischen der Belagträgerplatte 2 und der Haube 5 entsteht.

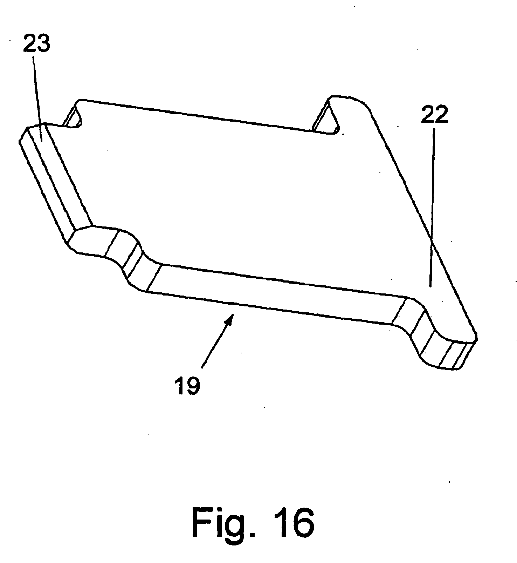

Im übrigen ist in der Figur 16 die Anschlagplatte 19 als Einzelheit dargestellt, wobei zu erkennen ist, dass die dem Anschlagriegel 22 gegenüberliegende Seite Einführschrägen 23 aufweist, durch die ein leichteres Einführen in den zugeordneten Schlitz der Haube 5 möglich ist.

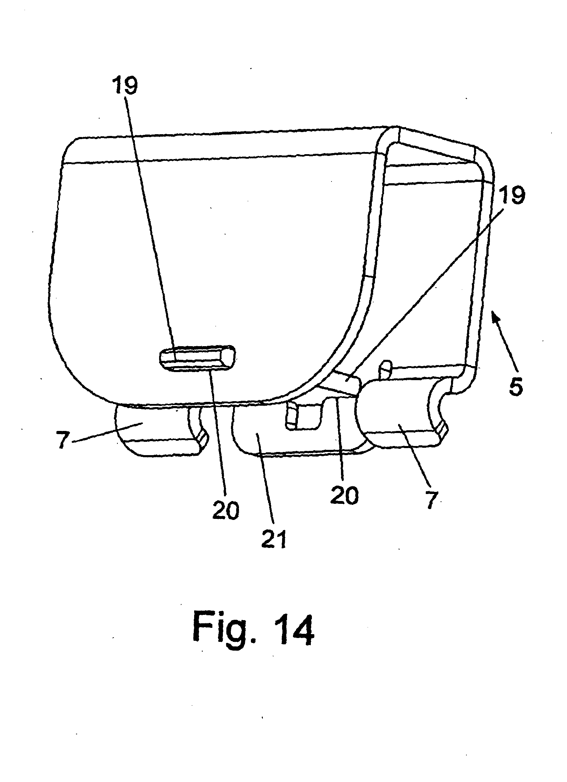

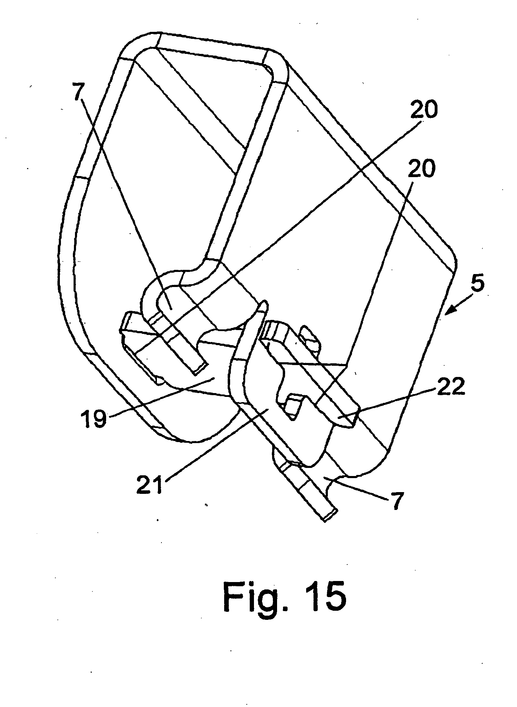

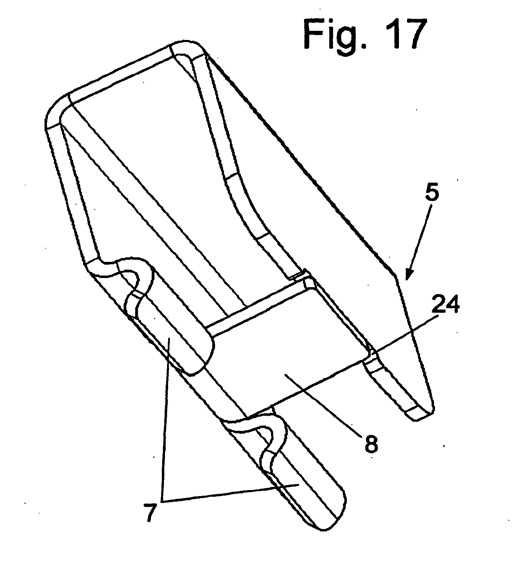

Bei dem in der Figur 17 gezeigten Beispiel erstreckt sich die Nase 8 über die gesamte Breite der Haube 5, wobei sie, vergleichbar der Anschlagplatte 19 entsprechend den Figuren 13 - 15, die Ausnehmung 10 der Belagträgerplatte 2 vollständig durchtritt und auf der den Zähnen 7 gegenüberliegenden Seite in einer Aussparung 24 des zugeordneten Schenkels der Haube 5 einliegt.

Wie bereits zu dem Ausführungsbeispiel gemäß der Figur 6 beschrieben, wird die Nase 8 nach einem Aufsetzen der Haube auf die Belagträgerplatte 2 unter Einschluss der Belaghaltefeder 4 innerhalb der Ausnehmung 10 umgebogen, bis sie in der Aussparung 24 einliegt.

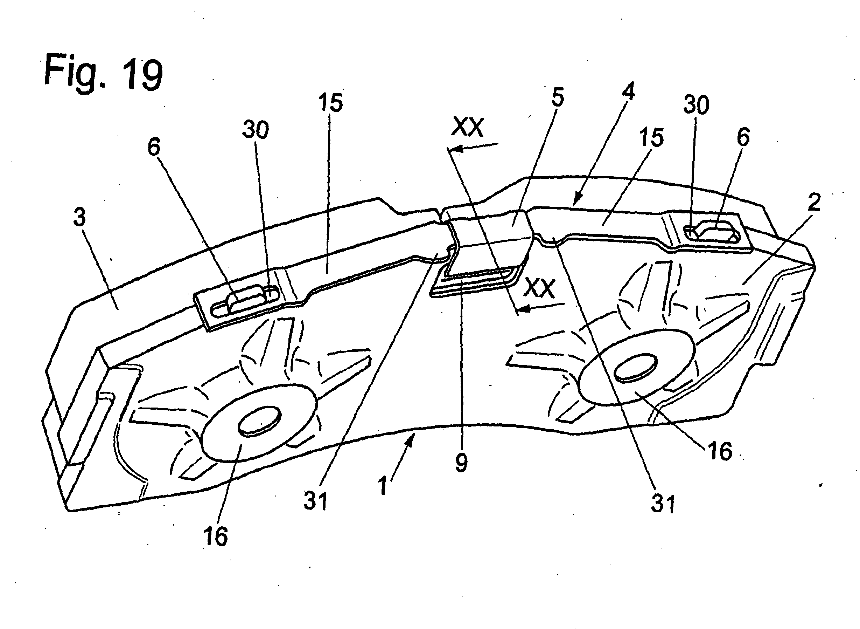

In der Figur 19 ist ein Bremsbelag 1 dargestellt, bei dem die Belaghaltefeder 4 bzw. die beiden Federschenkel 15 jeweils einen langlochförmigen Längsschlitz 30 aufweisen, der von den zugeordneten Laschen 6 durchtreten wird, sodass der Schiebeweg der Schenkel 15 beidseitig begrenzt ist. Hierzu ist jeder Längsschlitz 30 in seiner Länge entsprechend größer als die Länge der jeweiligen Lasche 6.

Wie weiter in der Figur 19 zu sehen ist, weist die Belaghaltefeder 4 beidseitig der Haube 5 angeformte Anschläge 31 auf, die sich zumindest nach einer Seite quer zur Längsrichtung der Belaghaltefeder 4 erstrecken.

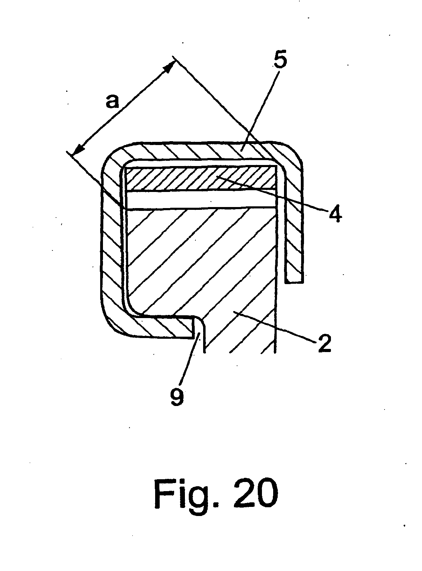

Dabei ist die Querschnittsdiagonale "a" (Figur 20) der Haube 5 im Zusammenspiel mit der Belagträgerplatte 2 im Überdeckungsbereich der Belaghaltefeder 4 kleiner als die Breite der Belaghaltefeder 4 im Bereich des jeweiligen Anschlages 31.

### Bezugszeichenliste

- 1: Bremsbelag
- 2: Belagträgerplatte
- 3: Reibbelag
- 4: Belaghaltefeder
- 5: Haube
- 6: Lasche
- 7: Zahn
- 8: Nase
- 9: Nut
- 10: Ausnehmung
- 11: Buckel
- 12: Loch
- 13: Bereichsanfang
- 14: Anschlag
- 15: Federschenkel
- 16: Druckstück
- 17: Schlitz
- 18: Ausklinkung
- 19: Anschlagplatte
- 20: Einführschlitz
- 21: Schenkel
- 22: Anschlagriegel
- 23: Einführschräge
- 24: Aussparung
- 25: Ausnehmungen
- 26: Rippen
- 27: Bremssattel
- 28: Bremsscheibe
- 29: Haltebügel
- 30: Längsschlitz
- 31: Anschlag

## Patentansprüche

1. Bremsbelag für eine Scheibenbremse, insbesondere für ein Nutzfahrzeug, der eine als bogenförmige Blattfeder ausgebildete Belaghaltefeder (4) aufweist, die verliergesichert und im Mittenbereich radial auslenkbar an einer einen Reibbelag (3) tragenden Belagträgerplatte (2) eines Bremsbelages (1) gehalten ist, wobei die Belaghaltefeder (4) mittels einer an der Belaghaltefeder (4) befestigten Haube (5) mit der Belagträgerplatte (2) formschlüssig verbunden ist,
**dadurch gekennzeichnet dass** die Belagträgerplatte und die Haube miteinander korrespondierende Formschlussteile aufweisen, welche die radiale Auslenkung der Blattfeder an der Belagträgerplatte zulassen.

2. Bremsbelag nach Anspruch **1, dadurch gekennzeichnet, dass** die Haube (5) unlösbar mit der Belagträgerplatte (2) verbunden ist.

3. Bremsbelag nach Anspruch 1 oder 2, **dadurch gekennzeichnet, dass** die Haube (5) eine Nase (8) aufweist, die in einer in Durchbiegerichtung der Belaghaltefeder (4) sich erstreckenden Ausnehmung (10) der Belagträgerplatte (2) einliegt und in einer entspannten Endstellung an einem Anschlag (14), der die Ausnehmung (10) begrenzt, anliegt.

4. Bremsbelag nach Anspruch 3 **dadurch gekennzeichnet, dass** die Haube (5) mindestens einen, der Nase (8) benachbarten Zahn (7) aufweist, der in einer parallel zur Ausnehmung (10) verlaufenden Nut (9) der Belagträgerplatte (2) einliegt.

5. Bremsbelag nach Anspruch 1, **dadurch gekennzeichnet, dass** die Haube (5) durch Form- oder Stoffschluss mit der Belaghaltefeder (4) verbunden ist.

6. Bremsbelag nach einem der vorhergehenden Ansprüche, **dadurch gekennzeichnet, dass** die Haube (5) im Querschnitt etwa U-förmig ausgebildet ist und die Belaghaltefeder (4) im Mittenbereich übergreift.

7. Bremsbelag nach einem der vorhergehenden Ansprüche, **dadurch gekennzeichnet, dass** die Belagträgerplatte (2) angeformte Laschen (6) aufweist, an denen die Belaghaltefeder (4) anliegt.

8. Bremsbelag nach Anspruch 7, **dadurch gekennzeichnet, dass** die Belaghaltefeder (4) seitlich an den Laschen (6) anliegt.

9. Bremsbelag nach einem der Ansprüche 7 oder 8, **dadurch gekennzeichnet, dass** die Belaghaltefeder (4) an beiden Enden, etwa mittig angeordnet, sich in Längsachsrichtung erstreckende Schlitze (17) aufweist, in denen die, bezogen auf die Dicke der Belagträgerplatte (2) mittig angeordneten Laschen (6) geführt sind.

10. Bremsbelag nach einem der vorhergehenden Ansprüche 3 bis 9, **dadurch gekennzeichnet, dass** die Ausnehmung (10) und/oder die Nut (9) auf der dem Reibbelag (3) abgewandte Rückseiten der Belagträgerplatten (2) vorgesehen sind.

11. Bremsbelag nach einem der vorhergehenden Ansprüche, **dadurch gekennzeichnet, dass** die Haube (5) in dem der Belaghaltefeder (4) zugewandten Mittenbereich der Belagträgerplatte (2) befestigt ist.

12. Bremsbelag nach einem der vorhergehenden Ansprüche, **dadurch gekennzeichnet, dass** die Belaghaltefeder (4) mindestens zwei Bereiche mit unterschiedlichem Federverhalten aufweist.

13. Bremsbelag nach einem der vorhergehenden Ansprüche, **dadurch gekennzeichnet, dass** die Belaghaltefeder (4) im Überdeckungsbereich der Haube (5) einen gegenüber benachbarten Federschenkeln (15) progressiveren Federkraftverlauf aufweist.

14. Bremsbelag nach einem der vorhergehenden Ansprüche 3 bis 13, **dadurch gekennzeichnet, dass** die Nase (8) durch die als Durchbrechung ausgebildete Ausnehmung (10) der Belagträgerplatte (2) geführt ist und sich mit ihrem freien Ende in einer Aussparung (24) der Haube (5) abstützt.

15. Bremsbelag nach einem der vorhergehenden Ansprüche, **dadurch gekennzeichnet, dass** die Haube (5) mittels einer Anschlagplatte (19) an der Belagträgerplatte (2) gehalten ist.

16. Bremsbelag nach Anspruch 15, **dadurch gekennzeichnet, dass** die Anschlagplatte (19) durch Einführschlitze (20) der beiden sich gegenüberliegenden Schenkel der U-förmigen Haube (5) geführt sind.

17. Bremsbelag nach einem der Ansprüche 15 oder 16, **dadurch gekennzeichnet, dass** die Anschlagplatte (19) die als Durchbrechung ausgebildete Ausnehmung (10) vollständig durchtritt.

18. Bremsbelag nach einem der Ansprüche 15 bis 17, **dadurch gekennzeichnet, dass** die Anschlagplatte (19) an einem Ende einen Anschlagriegel (22) aufweist, der an der Außenseite einer der beiden Schenkel der Haube (5) anliegt.

19. Bremsbelag nach einem der Ansprüche 15 bis 18, **dadurch gekennzeichnet, dass** die Anschlagplatte (19) fest mit der Haube (5) verbunden ist.

20. Bremsbelag nach einem der vorhergehenden Ansprüche, **dadurch gekennzeichnet, dass** die Belagträgerplatte (2) auf der dem Reibbelag (3) abgewandten Rückseite mindestens ein einstückig angeformtes Druckstück (16) aufweist, an das ein Element einer Zuspannvorrichtung der Scheibenbremse, insbesondere eine Stellspindel, andrückbar ist.

21. Bremsbelag nach Anspruch 20, **dadurch gekennzeichnet, dass** die Belagträgerplatte (2) auf der dem Reibbelag (3) abgewandten Rückseite zwei der Druckstücke (16) aufweist und dass die Druckstücke (16) jeweils eine Ausnehmung (25) aufweisen.

22. Bremsbelag nach einem der Ansprüche 20 oder 21, **dadurch gekennzeichnet, dass** die Druckstücke (16) radial verlaufende rippen (26) aufweisen.

23. Bremsbelag nach einem der vorhergehenden Ansprüche, **dadurch gekennzeichnet, dass** die Belaghaltefeder (4) an beiden Endbereichen etwa mittig angeordnete, sich in Längsachsrichtung erstreckende langlochförmige Längsschlitze (30) aufweist, in denen die, bezogen auf die Dicke der Belagträgerplatte (2) mittig angeordneten Laschen (6) geführt sind.

24. Bremsbelag nach Anspruch 23, **dadurch gekennzeichnet, dass** die Länge der Längsschlitze (30) größer ist als die Länge der Laschen (6).

25. Bremsbelag nach einem der vorhergehenden Ansprüche, **dadurch gekennzeichnet, dass** die Belaghaltefeder (4) in den der Haube (5) benachbarten Bereichen jeweils mindestens einen, sich quer zur Längsrichtung der Belaghaltefeder (4) erstreckende Anschlag (31) aufweist, wobei die Breite der Belaghaltefeder (4) in diesem Bereich größer ist als die lichte Breite der Haube (5).

26. Bremsbelag nach einem der vorhergehenden Ansprüche, **dadurch gekennzeichnet, dass** die gemeinsame Querschnittsdiagonale (a) der Haube (5) und des Bremsbelages (2) dem Überdeckungsbereich der Belaghaltefeder (4) kleiner ist als die Breite der Belaghaltefeder im Bereich des jeweiligen Anschlags (31).

## Claims

1. Brake lining for a disc brake, in particular for a utility vehicle, which comprises a lining retention spring (4) in the form of a curved leaf spring held permanently fixed but able to be deflected radially in its central area on a lining carrier plate (2) of a brake lining (1) that carries a friction lining (3), the lining retention spring (4) being connected with positive interlock to the lining carrier plate (2) by means of a hood (5) attached on the lining retention spring (4), **characterised in that** the lining carrier plate and the hood have mutually corresponding interlocking elements that permit the radial deflection of the leaf spring on the lining carrier plate.

2. Brake lining according to Claim 1, **characterised in that** the hood (5) is permanently connected to the lining carrier plate (2).

3. Brake lining according to either of Claims 1 or 2, **characterised in that** the hood (5) has a tongue (8) which engages in a recess (10) of the lining carrier plate (2) that extends in the bending direction of the lining retention spring (4) and, in an unstressed end position, abuts against a stop (14) which delimits the recess (10).

4. Brake lining according to Claim 3, **characterised in that** the hood (5) comprises at least one tooth (7) adjacent to the tongue (8), which engages in a groove (9) of the lining carrier plate (2) that extends parallel to the recess (10).

5. Brake lining according to Claim 1, **characterised in that** the hood (5) is joined to the lining retention spring (4) by positive interlock or by material bonding.

6. Brake lining according to any of the preceding claims, **characterised in that** the cross-section of the hood (5) is approximately U-shaped and fits over the lining retention spring (4) in its central area.

7. Brake lining according to any of the preceding claims, **characterised in that** the lining carrier plate (2) has tabs (6) formed on it, against which the lining retention spring (4) abuts.

8. Brake lining according to Claim 7, **characterised in that** the lining retention spring (4) abuts laterally against the tabs (6).

9. Brake lining according to either of Claims 7 or 8, **characterised in that** at its two ends the lining retention spring (4) has slots (17) arranged approximately centrally and extending in the longitudinal direction, in which the tabs (6), which are arranged centrally in relation to the thickness of the lining carrier plate (2), engage.

10. Brake lining according to any of the preceding Claims 3 to 9, **characterised in that** the recess (10) and/or the groove (9) is/are located on the rear side of the lining carrier plate (2) facing away from the friction lining (3).

11. Brake lining according to any of the preceding claims, **characterised in that** the hood (5) is fixed in the central area of the lining carrier plate (2) facing toward the lining retention spring (4).

12. Brake lining according to any of the preceding claims, **characterised in that** the lining retention spring (4) comprises at least two regions with different spring characteristics.

13. Brake lining according to any of the preceding claims, **characterised in that** in the area covered by the hood (5), the lining retention spring (4) shows a more progressive spring force variation compared with the spring sections adjacent thereto.

14. Brake lining according to any of the preceding claims 3 to 13, **characterised in that** the tongue (8) extends through the recess (10) in the lining carrier plate (2), said recess being formed as an aperture, and rests with its free end in a cut-out (24) of the said hood (5).

15. Brake lining according to any of the preceding claims, **characterised in that** the hood (5) is held on the lining carrier plate (2) by means of a stop plate (19).

16. Brake lining according to Claim 15, **characterised in that** the stop plate (19) passes through insertion slots (20) in the two opposite flanks of the U-shaped hood (5).

17. Brake lining according to either of Claims 15 or 16, **characterised in that** the stop plate (19) passes completely through the recess (10) formed as an aperture.

18. Brake lining according to any of Claims 15 to 17, **characterised in that** at one end the stop plate (19) has a stop bar (22) which rests against the outside of one of the two flanks of the hood (5).

19. Brake lining according to any of Claims 15 to 18, **characterised in that** the stop plate (19) is permanently connected to the hood (5).

20. Brake lining according to any of the preceding claims, **characterised in that** on its rear side facing away from the friction lining (3), the lining carrier plate (2) comprises at least one integrally formed pressure element (16) against which an element of an application device of the disc brake, in particular an adjustment spindle, can press.

21. Brake lining according to Claim 20. **characterised in that** on its rear side facing away from the friction lining (3), the lining carrier plate (20 has two such pressure elements (16) and the said pressure elements (16) each have a recess (25).

22. Brake lining according to either of Claims 20 or 21, **characterised in that** the pressure elements (16) have radially extending ribs (26).

23. Brake lining according to any of the preceding claims, **characterised in that** at its two end areas and arranged approximately centrally, the lining retention spring (4) has slot-shaped elongated slits (30) that extend in the longitudinal direction, in which the tabs (6) located centrally in relation to the thickness of the lining carrier plate (2) are engaged.

24. Brake lining according to Claim 23, **characterised in that** the length of the said elongated slits (30) exceeds the length of the tabs (6).

25. Brake lining according to any of the preceding claims, **characterised in that** in its regions close to the hood (5) the lining retention spring (4) has in each case at least one stop (31) extending transversely to the longitudinal direction of the lining retention spring (4), and the width of the lining retention spring (4) in this area is larger than the clear width of the hood (5).

26. Brake lining according to any of the preceding claims, **characterised in that** the common cross-sectional diagonal (a) of the hood (5) and the brake lining (2) in the covering area of the lining retention spring (4) is smaller than the width of the lining retention spring in the area of the respective stop (31).

## Revendications

1. Garniture de frein pour un frein à disque, notamment pour un véhicule utilitaire, qui a un ressort (4) de maintien de garniture constitué sous la forme d'un ressort à lame arqué, qui est retenu, sans pouvoir se perdre et avec possibilité de déviation radialement dans la partie médiane, sur une plaque (2) porte-garniture portant une garniture (3) de friction d'une garniture (1) de frein, le ressort (4) de maintien de la garniture étant assemblée à complémentarité de forme à la plaque (2) porte-garniture au moyen d'une coiffe (5) fixée au ressort (4) de maintien de garniture, **caractérisée en ce que** la plaque porte-garniture et la coiffe ont des parties à complémentarité de forme, qui se correspondent et qui autorisent la déviation radiale du ressort à lame sur la plaque porte-garniture.

2. Garniture de frein suivant la revendication 1, **caractérisée en ce que** la coiffe (5) est assemblée de manière inamovible à la plaque (2) porte-garniture.

3. Garniture de frein suivant la revendication 1 ou 2,
**caractérisée en ce que** la coiffe (5) a un bec (8) qui pénètre dans un évidement (10) de la plaque (2) porte-garniture, l'évidement s'étendant dans la direction de flexion du ressort (4) de maintien de la garniture, et qui s'applique, dans une position d'extrémité détendue, à une butée (14) qui délimite l'évidement (10).

4. Garniture de frein suivant la revendication 3, **caractérisée en ce que** la coiffe a au moins une dent (7) qui est voisine du bec (8) et qui pénètre dans une rainure (9) de la plaque (2) de porte-garniture, rainure qui s'étend parallèlement à l'évidement (10).

5. Garniture de frein suivant la revendication 1, **caractérisée en ce que** la coiffe (5) est assemblée au ressort (4) de maintien de la garniture par complémentarité de forme ou par complémentarité de matière.

6. Garniture de frein suivant l'une des revendications précédentes, **caractérisée en ce que** la coiffe (5) est en section transversale à peu près en forme de U et enjambe dans la partie médiane le ressort (4) de maintien de la garniture.

7. Garniture de frein suivant l'une des revendications précédentes, **caractérisée en ce que** la plaque (2) porte-garniture a des éclisses (6) qui sont formées et sur lesquelles le ressort (4) de maintien de la garniture s'applique.

8. Garniture de frein suivant la revendication 7, **caractérisée en ce que** le ressort (4) de maintien de la garniture s'applique latéralement aux éclisses (6).

9. Garniture de frein suivant la revendication 7 ou 8,
**caractérisée en ce que** le ressort (4) de maintien de garniture a aux deux extrémités des fentes (17) disposées au milieu, s'étendant dans la direction de l'axe longitudinale et dans lesquelles sont guidées les éclisses (6) disposées au milieu rapporté à l'épaisseur de la plaque (2) porte-garniture.

10. Garniture de frein suivant l'une des revendications 3 à 9, **caractérisée en ce que** l'évidement (10) et/ou la rainure (9) sont prévus sur les côtés de la plaque (2) porte-garniture éloignés de la garniture (3) de friction.

11. Garniture de frein suivant l'une des revendications précédentes, **caractérisée en ce que** la coiffe (5) est fixée dans la partie médiane de la plaque (2) porte-garniture, tournée vers le ressort (4) de maintien de la garniture.

12. Garniture de frein suivant l'une des revendications précédentes, **caractérisée en ce que** le ressort (4) de maintien de la garniture a au moins deux parties ayant des propriétés de ressort différentes.

13. Garniture de frein suivant l'une des revendications précédentes, **caractérisée en ce que** le ressort (4) de maintien de la garniture a, dans la partie à recouvrement de la coiffe (5), une courbe de force élastique plus progressive que des branches (15) de ressort voisines.

14. Garniture de frein suivant l'une des revendications 3 à 13 précédentes, **caractérisée en ce que** le bec (8) est guidé par l'évidement (10), constitué sous la forme d'une traversée de la plaque (2) porte-garniture, et s'appuie par son extrémité libre dans un évidement (24) de la coiffe (5).

15. Garniture de frein suivant l'une des revendications précédentes, **caractérisée en ce que** la coiffe (5) est maintenue sur la plaque (2) porte-garniture au moyen d'une plaque (19) de butée.

16. Garniture de frein suivant la revendication 15,
**caractérisée en ce que** les plaques (19) de butée sont guidées par des fentes (20) d'introduction des deux branches opposées l'une à l'autre de la coiffe (5) en forme de U.

17. Garniture de frein suivant l'une des revendications 15 ou 16, **caractérisée en ce que** la plaque (19) de butée traverse entièrement l'évidement (10) constitué sous la forme d'une traversée.

18. Garniture de frein suivant l'une des revendications 15 à 17, **caractérisée en ce que** la plaque (19) de butée a, à une extrémité, un verrou (22) de butée, qui s'applique au côté extérieur de l'une des deux branches de la coiffe (5).

19. Garniture de frein suivant l'une des revendications 15 à 18, **caractérisée en ce que** la plaque (19) de butée est assemblée de manière fixe à la coiffe (5).

20. Garniture de frein suivant l'une des revendications précédentes, **caractérisée en ce que** la plaque (2) porte-garniture a, du côté arrière éloigné de la garniture (3) de friction, au moins une pièce (16) d'application d'une pression, d'un seul tenant et sur laquelle peut être poussé un élément d'un dispositif de serrage du frein à disque, notamment une broche de réglage.

21. Garniture de frein suivant la revendication 20,
**caractérisée en ce que** la plaque (2) porte-garniture a, du côté arrière éloigné de la garniture (3) de friction, deux des pièces (16) d'application d'une pression et **en ce que** les pièces (16) d'application d'une pression ont respectivement un évidement (25).

22. Garniture de frein suivant l'une des revendications 20 ou 21, **caractérisée en ce que** les pièces (16) d'application d'une pression ont des nervures (26) s'étendant radialement.

23. Garniture de frein suivant l'une des revendications précédentes, **caractérisée en ce que** le ressort (4) de maintien de la garniture a, à ses deux parties d'extrémité, des fentes (30) longitudinales en forme de boutonnière et s'étendant dans la direction longitudinale, en étant disposées à peu près au milieu, dans lesquelles les éclisses (6), disposées au milieu rapporté à l'épaisseur de la plaque (2) porte-garniture, sont guidées.

24. Garniture de frein suivant la revendication 23,
**caractérisée en ce que** la longueur des fentes (30) longitudinales est plus grande que la longueur des éclisses (6).

25. Garniture de frein suivant l'une des revendications précédentes, **caractérisée en ce que** le ressort (4) de maintien de la garniture a, dans les parties voisines de la coiffe (5), respectivement au moins une butée (31) s'étendant transversalement à la direction longitudinale du ressort (4) de maintien de la garniture, la largeur du ressort (4) de maintien de la garniture dans cette partie étant plus grande que la largeur libre de la coiffe (5).

26. Garniture de frein suivant l'une des revendications précédentes, **caractérisée en ce que** la diagonale (a) commune en section transversale de la coiffe (5) et de la garniture (2) de frein dans la zone de partie de recouvrement du ressort (4) de maintien de la garniture est plus petite que la largeur du ressort de maintien de la garniture dans la partie de la butée (31) respective.
